# FASCICULE DE BREVET EUROPEEN

(11) **EP 1 100 025 B1**
(45) Date de publication et mention de la délivrance du brevet: **22.10.2008**
(21) Numéro de dépôt: 00403081.3
(22) Date de dépôt: 07.11.2000
(51) Int. Cl.: G06F 17/30

(54) **Procédé d'appareillement de logo et de site Internet**
Verfahren zum Verknüpfen von Logos und Internet-Sites
Method for pairing logos with internet sites

(30) Priorité: 10.11.1999 FR 9914125
(43) Date de publication de la demande: 16.05.2001
(73) Titulaire: Sagem Communications, 75512 Paris (FR)
(72) Inventeur: Cuoq, M. Jean Noel, 92150 Suresnes (FR)
(74) Mandataire: Schmit, Christian Norbert Marie

(56) Documents cités:
- LINDA COLE: "The Dastardly 'favicon.ico not found' Error" WEB DEVELOPER'S <VIRTUAL LIBRARY>, [en ligne] 3 août 1999 (1999-08-03), XP002149772 Extrait de l'Internet: <URL:http://www.wdvl.com/Authoring/Design/ Images/Favicon/icon.html> [extrait le 2000-10-11]
- PC MAGAZINE / ZDNET SOFTWARE LIBRARY, [en ligne] 4 octobre 2000 (2000-10-04), XP002149773 Extrait de l'Internet: <URL:http://www.zdnet.com/downloads/storie s/info/0,,001BXO,.html> [extrait le 2000-10-11] & "FavOrg v1.0" PC MAGAZINE, vol. 19, no. 19, 7 novembre 2000 (2000-11-07), US

## Description

Le brevet a pour objet un procédé d'appareillement de logo et de site Intemet. Le domaine de l'invention est celui de l'exploration, ou de la navigation, sur un réseau. Un réseau est constitué par des sites et des liens qui existent entre ces sites. Chaque site comporte sur le réseau une adresse. On accède à un site grâce à son adresse. On navigue sur un réseau grâce à un navigateur auquel on fournit l'adresse d'un site. Le navigateur est un outil comportant des composantes matérielles et logicielles, et auxquelles on fournit l'adresse du site. Le navigateur peut alors se connecter au site et télécharger, ou rapatrier, les informations contenues dans ce site, et les présenter à l'utilisateur du navigateur.

Le but de l'invention est de permettre aux éditeurs de sites Internet sur un autre réseau, d'associer l'adresse de leur site à un logo. Ainsi lorsqu'un navigateur présentera à un utilisateur une liste de noms de sites, les noms de sites seront associés à ce logo. C'est-à-dire que logos et noms de site seront affichés en vis-à-vis l'un de l'autre. Cela permet d'accélérer la recherche par l'utilisateur d'un nom de site particulier. De plus, selon l'invention, cette association peut être effectuée sans qu'il y ait de redevance à payer à un éditeur de logiciel de navigation.

Dans l'état de la technique on connaît des logiciels de navigation, aussi appelé navigateur, qui gère des listes de noms de sites. Dans ces listes de noms de sites, en face de chacun des noms un navigateur prévoit d'afficher un logo. Ce logo dépend soit d'un partenariat entre un éditeur d'un logiciel de navigation et d'un éditeur de site, soit de la nature du site.

L'article par L. Cole: "The Dastardly'favicon.ico not found' Error", publié sur le site Internet WEB DEVELOPER'S <VIRTUAL LIBRARY> explique l'interaction du navigateur Microsoft Internet Explorer IE5^{™}, qui télécharge depuis les sites Internet navigués des logos à mémoriser dans la liste des signets de l'utilisateur. Cet article soulève le problème posé par les sites n'ayant pas de logo disponible, et se contente d'en proposer l'ajout aux sites eux-mêmes comme solution.

Dans le cas d'un partenariat, l'éditeur de site a pu choisir son logo et le faire incorporer dans le logiciel de navigation par l'éditeur du logiciel. Si le partenariat est rompu, ou si l'éditeur de site souhaite changer son logo, il faut alors directement intervenir sur le logiciel lui-même. Cela est peu pratique étant donné la grande diffusion de ce genre de logiciel.

S'il n'y a pas de partenariat entre l'éditeur du logiciel de navigation et l'éditeur du site, le logo affiché est alors fonction du type du site, et notamment du protocole utilisé pour accéder à ce site. Ainsi les sites utilisant le protocole Hypertext (HTTP pour Hyper Text Transfert Protocole) auront un logo différent des sites de transfert de fichier utilisant le protocole associé (FTP pour File Transfert Protocole). Dans ce cas les sites ne sont différenciés que par leur nature et non pas par leur contenu au niveau du logo qui leur est associé. Comme précédemment, si un partenariat est conclu, postérieurement à la mise sur le marché du logiciel de navigation, entre l'éditeur de logiciel et l'éditeur du site Intemet, il faut alors faire une mise à jour du logiciel de navigation ce qui n'est pas aisé.

L'invention résout ces problèmes en connectant à un réseau, Internet par exemple, un serveur de logo. Sur ce serveur de logo on crée une base de données associant des adresses de sites et des fichiers de logos. Un fichier de logos est un ensemble d'informations stockées de manière unitaire dans une mémoire, ces informations permettent à un logiciel de reproduire le logo sur un écran. Lorsqu'un navigateur selon l'invention se connecte à un site pour lequel il n'a pas de fichier logo associé à l'adresse, il va alors se connecter au serveur de logos et interroger celui-ci pour obtenir le fichier de logos correspondant à l'adresse du site auquel il s'est connecté. Le serveur de logos retourne alors le fichier de logos correspondant à l'adresse du site. Si le serveur de logos n'a pas de fichier logo associé à l'adresse du site, il retourne alors un fichier logo par défaut, ou message comme quoi il ne connaît pas de fichier logo associé à cette adresse.

Ainsi tous les éditeurs de sites Intemet peuvent demander à ce que l'adresse de leur site soit associée à un fichier logo sur le serveur de logos. De même s'il souhaite changer ce fichier logo il ne faut pas mettre à jour les navigateurs mais simplement les fichiers contenus sur le serveur de logos.

L'invention a donc pour objet un procédé automatique d'appariement de logos et d'adresses Internet exécuté par un navigateur dans lequel:
- on enregistre dans une mémoire d'un terminal une liste de noms de sites, chaque nom de site correspondant à une adresse Internet,
- on affiche, grâce à une procédure d'un logiciel, sur un écran du terminal la liste des noms de sites enregistrés,
- on affiche, grâce à une procédure d'un logiciel et en vis à vis de chaque nom de site un logo apparié à ce nom de site,
caractérisé en ce que:
- on se connecte à un serveur Internet de fichiers de logos et on obtient les fichiers de logos correspondant aux noms de sites contenus dans la liste de noms de sites,
- on enregistre les fichiers logos obtenus dans une mémoire de logo du terminal.

L'invention sera mieux comprise à l'examen de la description qui suit et des figures qui l'accompagnent. Celles-ci ne sont présentées qu'à titre indicatif et nullement limitatif de l'invention. Les figures montrent:

Figure 1: une illustration de moyens utilisés pour la mise en oeuvre du procédé selon l'invention.

Figure 2 : une illustration d'étape du procédé selon l'invention.

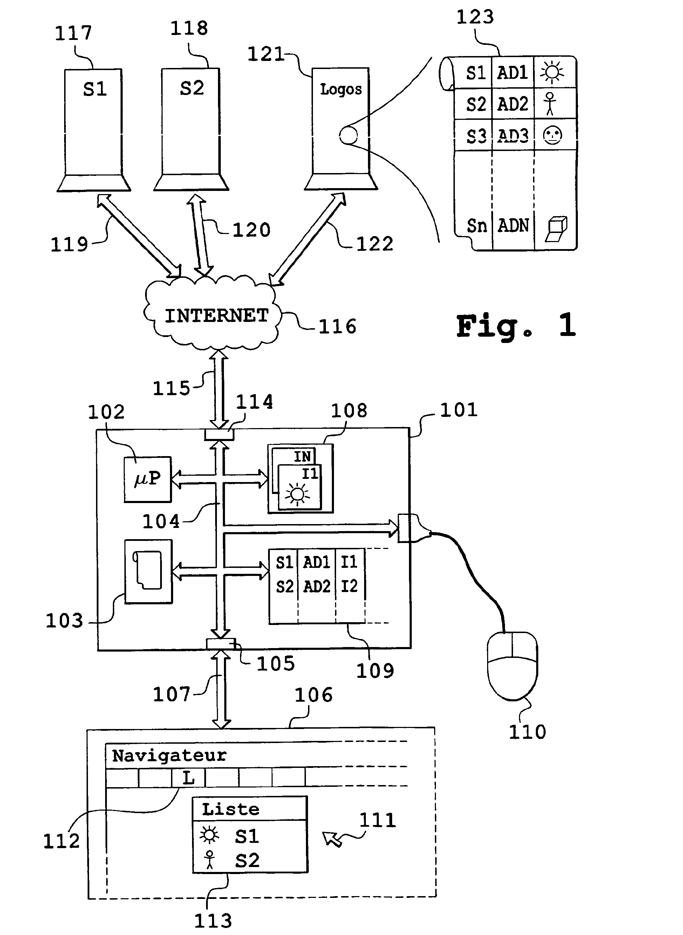

La figure 1 montre un navigateur 101 qui met en oeuvre le procédé selon l'invention. Le navigateur 101 comporte un microprocesseur 102 connecté à une mémoire 103 par un bus 104. La mémoire 103 comporte les codes instruction correspondant au logiciel de navigation. Ce logiciel de navigation est exécuté par le microprocesseur 102. Le navigateur 101 comporte aussi une interface 105 de connexion avec un écran 106. Dans la pratique cette interface 105 comporte une mémoire vidéo dans laquelle le microprocesseur 102 va venir écrire une image. Cette image sera alors, par des moyens de l'interface 105, lue et transmise par une connexion 107 à l'écran 106 afin que l'image soit affichée sur l'écran 106. L'interface est connectée au bus 104.

Le microprocesseur 102 est aussi connecté, par l'intermédiaire du bus 104, à une mémoire 108 de fichier de logos. La mémoire 108 comporte des fichiers logos numérotés, dans cet exemple, I1 à In. Un fichier de logos I1 contient les informations nécessaires au logiciel de navigation contenue dans la mémoire 103 pour que le microprocesseur 102, contrôlé par le logiciel contenu dans la mémoire 103, puisse mettre à jour la mémoire vidéo de l'interface 105. Dans un exemple les fichiers de la mémoire 108 peuvent être au format bitmap C'est-à-dire que le fichier de logos I1 comporte dans un entête des informations sur ses dimensions par exemple L * H pour la largeur et la hauteur de l'image puis L * H information de couleur correspondant au L * H éléments d'images constituant le logo représenté par le logo de fichier I1.

Dans la pratique il est peu probable qu'on utilise le format bitmap pour les fichiers de logos. Il s'agit cependant de l'exemple le plus simple à expliquer c'est pourquoi il a été utilisé ici. En effet on préférera utiliser un format jpeg ou un format gif. Le format jpeg est très apprécié car il permet des durées de transmission faibles étant donné son taux de compression de l'image élevé. Le format gif quant à lui est apprécié car il permet d'obtenir des images animées. Ces deux formats ne constituent pas une énumération exhaustive de tous les formats possibles pour l'enregistrement des fichiers de logos.

Le microprocesseur 102 est aussi connecté, par le bus 104, à une mémoire 109. La mémoire 109 est une base de données qui permet d'associer un nom de site, une adresse de site et un fichier de logos. C'est à partir du contenu de cette mémoire 109 que le logiciel contenu dans la mémoire 103 va pouvoir afficher sur l'écran 106 une liste de noms de sites associés à des logos. Pour ce faire le microprocesseur 102 est encore connecté par l'intermédiaire du bus 104 à un dispositif 110 de pointage. Le dispositif 110 de pointage permet de déplacer sur l'écran 106 un curseur 111.

L'exécution du logiciel de navigation provoque l'affichage de fenêtres sur l'écran 106. L'une de ces fenêtres est la fenêtre principale. Par fenêtre il faut comprendre une zone de l'écran. La dimension de la fenêtre est réglable grâce au dispositif 110 de pointage. La fenêtre principale comporte des boutons, qui sont des sous-zones de la fenêtre, que l'on peut sélectionner grâce au dispositif 110 de pointage. L'un de ces boutons correspond à l'affichage de la liste des sites contenus dans la mémoire 109. Lorsque l'utilisateur sélectionne ce bouton 112, il provoque l'affichage, par le microprocesseur 102 d'une fenêtre 113 contenant la liste des sites et des logos associés. L'utilisateur peut alors, toujours grâce au dispositif de pointage 110, sélectionner un des sites de la liste et s'y connecter. Puis à partir de ce site il peut alors se connecter vers d'autres sites. Il peut aussi choisir de se connecter directement à un site dont il connaît l'adresse, même si l'adresse de ce site n'est pas contenue dans la liste de la mémoire 109. D'autres fonctions du logiciel de navigation permettent d'insérer des adresses et des noms de site dans la liste 109. Ces fonctions ne sont pas décrites mais elles sont bien connues et elles existent dans tous les navigateurs.

Lorsque l'utilisateur a choisi un site, le navigateur 101 va se connecter, si ce n'est pas déjà fait, à Intemet. Pour cela le navigateur 101 comporte une interface 114 connectée au bus 104. Dans un exemple simple, cette interface 114 est un modem. Une connexion 115 permet donc de relier le modem 114 au réseau Intemet 116. Le réseau Internet 116 est à son tour connecté à des serveurs 117 et 118 appelés S1 et S2. Ces serveurs sont connectés au réseau Intemet respectivement par les connexions 119 et 120. Le nombre de serveurs représentés n'est pas représentatif du nombre de serveurs réellement connectés sur le réseau.

La figure 1 montre aussi que se trouve connecté au réseau 116 Internet un serveur 121 de logos. Ce serveur 121 de logos est connecté au réseau 116 par une connexion 122. Le serveur 121 comporte une base de données 123. La base de données 123 associe des noms de sites, des adresses de sites et des fichiers de logos. Le serveur 121 comporte aussi des moyens pour interroger la base de données et envoyer des fichiers. Ces moyens ne sont pas représentés. Il s'agit en effet, pour l'interrogation, de rechercher le fichier correspondant à une adresse ou à un nom, ce qui revient au parcours séquentiel dans le cas le plus simple. D'autres méthodes plus rapides sont connues. Pour le transfert il peut s'agir d'une mise en oeuvre du protocole FTP qui a été prévue pour la transmission de fichiers à travers le réseau Internet. Dans la pratique le serveur 121 comporte au moins un microprocesseur et une mémoire comportant les codes instructions correspondants aux procédés qui viennent d'être brièvement décrits.

Dans un exemple la base de données 123 est structurée en ligne, chaque ligne correspondant à un site et comportant 3 colonnes. Une première colonne correspond au nom du site, une deuxième à l'adresse du site, et un troisième au fichier de logos. Il y a donc autant de lignes que de sites référencés dans la base de données 123.

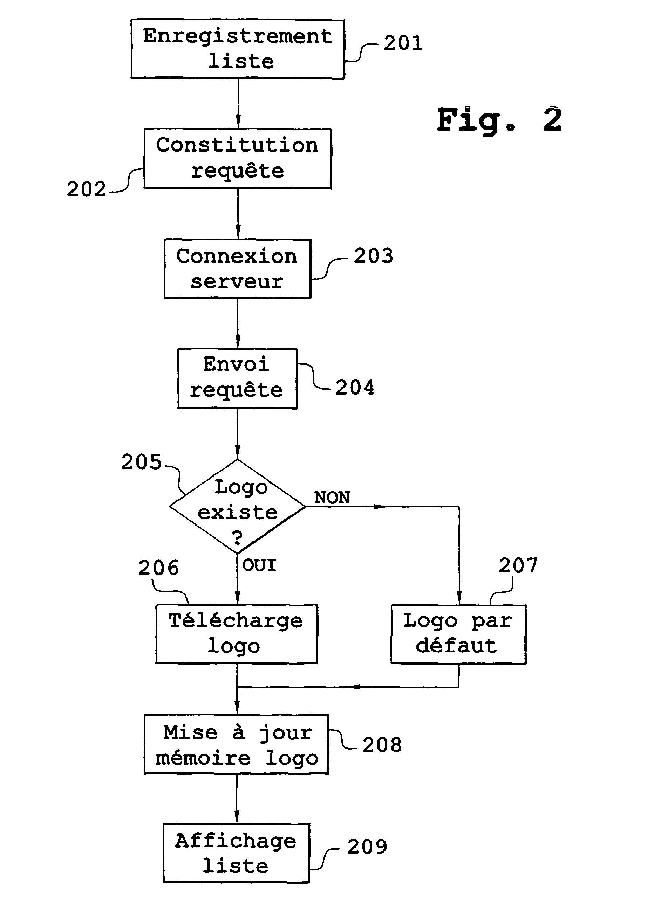

La figure 2 montre une étape 201, d'enregistrement de la liste, préliminaire. Dans un exemple on considère que la liste à enregistrer est celle qui retrace l'historique de la navigation d'un utilisateur sur le réseau Internet. C'est-à-dire c'est une liste qui comporte l'adresse de tous les sites par lesquels l'utilisateur est passé au cours de sa navigation. Dans ce cas à chaque fois que l'utilisateur arrive sur un site, la mémoire 109 est mise à jour. Pour cette mise à jour on inscrit sur une ligne et dans la première colonne le nom du site, sur la même ligne dans la deuxième colonne l'adresse du site. Les moyens mis en oeuvre pour gérer un débordement de la mémoire 109 sont connus. Il suffit, dans un exemple simple, de rajouter une nouvelle colonne par ligne. Dans cette colonne on enregistre la date à laquelle la ligne a été mise à jour. Lorsque la mémoire 109 est pleine, on recherche la plus vieille ligne et on l'écrase. Puis si le site ne comporte pas de logo associé, on passe à une étape 202 de constitution d'une requête.

Dans l'étape 202 le microprocesseur 102, commandé par une fonction du logiciel compris dans la mémoire 103 constitue une requête d'interrogation en vue d'obtenir un fichier de logos. Cette requête comporte entre autres, un identifiant de requête pour bien signifier à celui qui la recevra qu'il s'agit d'une demande d'envoi d'un fichier de logos. La requête comporte, aussi une première adresse Internet à laquelle le fichier de logos devrait être retourné, ainsi qu'une deuxième adresse Internet du site dont il faut retourner le fichier de logos. L'adresse Internet du site peut aussi être le nom du site. En effet la base 123 de données comporte à la fois le nom du site et l'adresse du site. Une fois la requête constituée, on passe à l'étape 203 de connexion au serveur de fichiers de logo.

Dans cette étape, le microprocesseur 102 effectue une connexion avec le serveur 121 via la connexion 115, le réseau 116 et la connexion 122. En fait dans la pratique il s'agit de l'envoi d'un message pour savoir si le serveur 121 est bien présent sur le réseau et fonctionne correctement. Il suffit pour cela que le logiciel connaisse l'adresse du serveur 121 sur le réseau. Une adresse étant affectée pour la durée de la vie du réseau, l'adresse du serveur 121 peut être directement paramétré par l'éditeur du logiciel de navigation. L'adresse du serveur 121 reste cependant un paramètre accessible à l'utilisateur du logiciel de navigation. On peut alors passer à une étape 204 d'envoi de la requête. Dans l'étape 204 le microprocesseur 122 envoie la requête à destination du serveur 121. On passe alors à une étape 205 de recherche du logo.

Dans l'étape 205 le serveur 121 recherche si l'adresse qui lui a été communiquée dans la requête que le microprocesseur 102 lui a envoyé figure dans la base de données 123. Si c'est le cas on passe à une étape 206 sinon on passe à une étape 207. La recherche peut être effectuée par un parcours séquentiel des lignes constituant la base 123 de données en comparant les adresses contenues dans la deuxième colonne à l'adresse qui a été communiquée au serveur 121 par la requête.

Dans l'étape 206 de téléchargement du logo, le serveur 121 transmet au navigateur 101 le logo correspondant à la deuxième adresse transmise dans la requête. Dans l'étape 207 de transmission du logo par défaut, le serveur 121 transmet à un fichier de logos par défaut. Il peut s'agir d'un fichier logo par défaut, ou d'un message prédéfini indiquant que le serveur 121 est incapable de satisfaire à la requête qu'il a reçue de la part du navigateur 101. On passe alors à une étape 208 de mise à jour de la mémoire de fichier de logos, ou mémoire 108.

Dans l'étape 208 le microprocesseur 102, sous le contrôle d'une fonction du logiciel de navigation, met à jour la mémoire 109 et la mémoire 108. Dans la mémoire 108 il enregistre le fichier de logo qu'il vient de recevoir de la part du serveur 121. Il associe aussi un identifiant à ce fichier de logos. Dans un autre exemple cet identifiant est un numéro allant de I1 à In. Bien-sûr il n'écrase pas un fichier de logos déjà existant. Si cela s'avère nécessaire il affecte l'identifiant In+1 au fichier qu'il vient de recevoir. Puis il met à jour la table de la mémoire 109. Pour cela il recherche dans cette table l'adresse du site Internet dont il vient d'obtenir le fichier de logo et dans la troisième colonne de la table sur la ligne de cette adresse il écrit l'identifiant du fichier de logos qu'il vient de recevoir. Cet identifiant est, dans notre exemple, de la forme Ix, où x est un indice permettant de localiser le fichier de logo dans la mémoire 108.

On passe à une étape 209 d'affichage de la liste. Dans l'étape 209 le microprocesseur 102 affiche la liste des noms de sites contenus dans la mémoire 109 ainsi que les fichiers de logos associés à ces noms de sites. Cet affichage comporte maintenant le fichier de logos qui vient d'être reçu.

Dans une variante de l'invention, la requête constituée à l'étape 202 peut être envoyée au site S2 lui-même si c'est le fichier de logo du site S2 que l'on souhaite obtenir. Si le site S2 est incapable d'envoyer un fichier logos ou n'est pas prévu pour envoyer ce fichier logos, alors la requête est envoyée au serveur 121.

Dans une autre variante de l'invention la mise à jour de la mémoire 108 et de la mémoire 109 est faite périodiquement. C'est-à-dire que la mémoire 109 est mise à jour à chaque fois que l'utilisateur se connecte à un nouveau site sauf en ce qui concerne la troisième colonne qui est celle du fichier de logos. Puis périodiquement, le navigateur 101 se connecte au serveur 121 et envoie des requêtes pour obtenir des fichiers de logos de tous les sites dont il n'a pas les fichiers de logos dont la mémoire 108. La période de cette mise à jour est paramétrable. Enfin afin de tenir compte des éventuels changements des logos des sites contenus dans la liste de sites, le navigateur 101 se connecte périodiquement au site 121 afin d'obtenir de la part de celui-ci tous les fichiers logos correspondants à tous les noms de sites contenus dans la liste. On est ainsi sûr d'avoir une mémoire 108 mise à jour. Dans ce cas les fichiers logos ainsi obtenus écrasent les fichiers logos déjà présents dans la liste 108.

Lorsqu'on écrase, ou supprime, une ligne de la mémoire 109, la mémoire 108 est mise à jour en parallèle c'est-à-dire qu'on supprime de la mémoire 108 le dessin référencé par la ligne de la mémoire 109 qu'on souhaite écraser ou supprimer.

## Revendications

1. Procédé automatique d'appariement de logos et d'adresses Internet exécuté par un navigateur dans lequel:
- on enregistre (201) dans une mémoire (109) d'un terminal une liste de noms de sites, chaque nom de site correspondant à une adresse Internet,
- on affiche (209), grâce à une procédure d'un logiciel (103), sur un écran (106) du terminal la liste des noms de sites enregistrés,
- on affiche, grâce à une procédure d'un logiciel et en vis à vis de chaque nom de site un logo apparié à ce nom de site,
**caractérisé en ce que :**
- pour obtenir les logos, le navigateur se connecte (203) à un serveur (121) Internet de fichiers de logos, le serveur Internet de fichiers de logos comportant une base de données (123) dans laquelle à chaque fichier de logos, comportant une donnée logo, est associé un nom de site et une adresse de site,
- on obtient les fichiers de logo correspondant aux noms de site contenus dans la liste de noms de sites,
- on enregistre les fichiers logos obtenus dans une mémoire (108) de logo du terminal.

2. Procédé selon la revendication 1, **caractérisé en ce que :**
- on enregistre (123) sur le serveur (121) Internet de fichiers de logos une base (123) de données qui met en relation des adresses Internet et des logos,
- on construit (202) une requête contenant une information identifiant un site contenu dans la liste,
- on se connecte (203) au serveur Internet de fichiers de logos contenant la base de données,
- on envoie (204) la requête à ce serveur Internet de fichiers de logos contenant la base de donnée pour obtenir un logo.

3. Procédé selon l'une des revendications 1 ou 2, **caractérisé en ce que :**
- on se connecte à un site sur Internet,
- on envoie une requête à ce site pour obtenir un logo correspondant à ce site.

4. Procédé selon l'une des revendications 1 à 3, **caractérisé en ce qu'**on fait une mise à jour de la liste de sites, et
- lors de cette mise à jour on détecte dans la liste de site quels sont ceux dont on n'a pas le logo,
- on envoie des requêtes pour obtenir les logos correspondant à ces sites.

5. Procédé selon l'une des revendications 1 à 4, **caractérisé en ce que** la mémoire (108) de logo du terminal est périodiquement mise à jour par l'envoi de requêtes au serveur (121) Internet de fichiers de logo par le navigateur.

## Claims

1. An automatic matching method of Internet logos and addresses performed by a browser wherein:
- a list of names of sites is saved (201) into a memory (109) of a terminal, each name of site corresponding to an Internet address,
- the list of the saved names of sites is displayed (209), thanks to a procedure of a software (103), on a display device (106) of the terminal,
- a logo matching this name of site is displayed, thanks to a procedure of a software and opposite to each name of site,
**characterised in that :**
- to obtain the logos, the web browser connects (203) to an Internet server center (121) of logo files, the logo files Internet server center comprising a database (123) wherein a name of site and an address of site is joined to each logo file, including a logo data,
- the logo files corresponding to the names of sites contained in the list of names of sites is obtained,
- the logo files obtained in a logo software (108) of logo of the terminal is saved,

2. A method according to claim 1 **characterised in that:**
- on the Internet server center (121) logo files a database (123) connecting the Internet addresses and logos is saved (123),
- a query is built (202) containing an information identifying a site included in the list,
- the connection (203) to the Internet logo files containing the database is performed,
- the query to this Internet server center logo files containing the database to obtain the logo is sent (204).

3. A method according to claim 1 or 2, **characterised in that**
- the connection to an Internet site is performed,
- a query is sent to this site to obtain a logo corresponding to this site.

4. A method according to one of claims 1 to 3, **characterised in that** an updating of the list of sites is performed and,
- during this updating the ones which have no logo in the site list are detected,
- queries to obtain the logos corresponding to these sites are sent.

5. A method according to one of claims 1 to 4, **characterised in that** the memory (108) of logo of the terminal is periodically updated by sending queries to the Internet server center (121) of logo files by the browser.

## Patentansprüche

1. Automatisches Verfahren zur Anpassung von Logos und Internetadressen, das von einem Browser ausgeführt wird, in dem
- man in einem Speicher (109) eines Terminals eine Liste mit Websitenamen abspeichert (201), wobei jeder Websitename einer Internetadresse entspricht,
- man die Liste mit den abgespeicherten Websitenamen mithilfe einer Programmprozedur (103) auf einem Bildschirm (106) des Terminals anzeigt (209),
- man mithilfe einer Programmprozedur und gegenüber jedem Websitenamen ein Logo anzeigt, das diesem Websitenamen angepasst ist,
**dadurch gekennzeichnet, dass:**
- sich der Browser zum Erhalt der Logos in einen Internetserver (121) mit den Logodateien einwählt (203), wobei der Internetserver mit den Logodateien eine Datenbank (123) enthält, in der jeder Logodatei, die ein Logodatum enthält, ein Websitename und eine Websiteadresse zugeordnet wird,
- man Logodateien erhält, die den Websitenamen entsprechen, die in der Liste mit den Websitenamen enthalten sind,
- man die erhaltenen Logodateien in einem Logospeicher (108) des Terminals abspeichert.

2. Verfahren nach Anspruch 1, **dadurch gekennzeichnet, dass:**
- man auf dem Internetserver (121) mit den Logodateien eine Datenbank (123) abspeichert (123), die die Internetadressen und die Logos miteinander verknüpft,
- man ein Ansuchen mit einer Information zur Identifizierung einer in der Liste enthaltenen Website erstellt (202),
- man sich in den Internetserver mit den Logodateien einwählt (203), der die Datenbank enthält,
- man das Ansuchen an diesen Internetserver mit den Logodateien, der die Datenbank enthält, abschickt (204), um ein Logo zu erhalten.

3. Verfahren nach einem der Ansprüche 1 oder 2, **dadurch gekennzeichnet, dass:**
- man sich in eine Website einwählt,
- man an diese Website ein Ansuchen abschickt, um ein Logo entsprechend dieser Website zu erhalten.

4. Verfahren nach einem der Ansprüche 1 bis 3, **dadurch gekennzeichnet, dass** man eine Aktualisierung der Websiteliste durchführt, und
- man bei dieser Aktualisierung jene Websites innerhalb der Liste erfasst, von denen man kein Logo hat,
- man Ansuchen abschickt, um die Logos zu erhalten, die diesen Websites entsprechen.

5. Verfahren nach einem der Ansprüche 1 bis 4, **dadurch gekennzeichnet, dass** der Logospeicher (108) des Terminals durch die Sendung von Ansuchen an den Internetserver (121) mit den Logodateien durch den Browser regelmäßig aktualisiert wird.
